# EUROPEAN PATENT APPLICATION

(11) **EP 3 266 551 A1**
(43) Date of publication of application: **10.01.2018**
(21) Application number: 17170791.2
(22) Date of filing: 12.05.2017
(51) Int. Cl.: B23K 9/20, B23K 9/32, B23K 9/16, B23K 9/29, B23K 3/08

(54) **PROTECTIVE GAS MOUTHPIECE, CONNECTION DEVICE AND CONNECTION METHOD**

(30) Priority: 13.05.2016 DE 102016108939
(71) Applicant: Newfrey LLC, New Britain, CT 06053 (US)
(72) Inventor: Hässler, Martin, 01069 Dresden (DE); Hubert, Ivo, 35394 Gießen (DE); Nicolas, Nab, 35394 Gießen (DE)
(74) Representative: SBD IPAdmin

(57) **Abstract**

Protective gas mouthpiece (30) for a connection device (10), having a base member (32) which has an axial opening (34) and a mouth (36) which is arranged around the opening (34) and which can be placed on a workpiece (14) on which a connection process is intended to be carried out, wherein the opening (34) adjacent to the mouth (36) defines a cleaning space (38) in which protective gas (44) can be introduced and which, when a connection process is carried out, can be axially delimited by a workpiece (14) which covers the opening (34).

In this instance, the protective gas (44) is introduced into the cleaning space (38) in such a manner that a main flow direction (48) of the protective gas (44) in a radial centre of the cleaning space (38) is orientated in a substantially radial and unidirectional manner.

## Description

The present invention relates to a protective gas mouthpiece for a connection device, such as a welding machine, having a base member which has an axial opening and a mouth which is arranged around the opening and which can be placed on a workpiece on which a connection process is intended to be carried out, wherein the opening adjacent to the mouth defines a cleaning space in which protective gas can be introduced and which, when a connection process is carried out, can be axially delimited by the workpiece which covers the opening.

The present invention further relates to a connection device having a connection element retention device and having a protective gas mouthpiece of the above-described type which surrounds the connection element retention device.

Finally, the present invention relates to a method for carrying out a connection process using protective gas, in particular by means of a protective gas mouthpiece of the above-described type.

Protective gas mouthpieces are often used in connection processes in the form of the so-called stud welding. This welding method serves to weld stud-like or other components to workpieces. In this instance, the preferred method is so-called arc stud welding in which there is drawn between a connection element (for example, a weld stud) and a workpiece an arc which melts opposing connection faces. Finally, the connection element is connected to the workpiece in order in this manner to short-circuit the arc and to interrupt the weld current, which leads to cooling of the entire melt and consequently to a connection between the connection element and workpiece.

In order to improve this connection process, it is known during the connection process to arrange around the connection element and the arc a protective gas mouthpiece into which the protective gas is introduced in order to displace ambient gas (for example, air) present inside the mouthpiece.

To this end, in the prior art, either the protective gas is often supplied over very long periods of time before the actual connection process can be initiated. This lengthens the cycle times. On the other hand, it is also known to supply the protective gas with relatively high flow rates which, in addition to cost disadvantages, may also involve disadvantageous welding results.

From the document DE 20 2004 001 667 U1, a protective gas mouthpiece for arc stud welding is known, wherein the mouthpiece has a body with a hollow space which has at least two openings. A movement device, in particular a welding device, can engage through a first opening. At a second opening, a connection element may be placed on a workpiece. The second opening may in this instance be substantially closed when the connection element is placed on the workpiece. Furthermore, a gas supply for supplying protective gas is provided in the hollow space, and a gas discharge for discharging protective gas supplied from the hollow space. The gas discharge during a welding operation is intended in this instance to substantially correspond to the first opening.

The construction of the mouthpiece can thereby be simplified. In addition, it is possible to work with low quantities of protective gas and low production costs can be achieved. In this instance, use is made of the physical effect that with respect to the air generally heavier protective gas accumulates on the lowest portion of the protective gas mouthpiece adjacent to the workpiece, wherein the ambient gas located in the mouthpiece is pressed upwards where it can be drawn off in a simple manner through the first opening.

The protective gas is introduced into the hollow space via an intermediate space between the base member and a gas connector. The introduction is intended to be carried out in such a manner that a laminar flow is obtained inside the mouthpiece so that gas flows continuously around the welding region.

Furthermore, document DE 20 2007 007 226 U1 discloses a protective gas mouthpiece in which the mouth of the base member is provided with a resilient sealing nozzle which is constructed in the manner of a bellows and which contributes to the protective gas being able to be discharged only upwards in the direction of the first opening.

Against this background, an object of the invention is to provide an improved protective gas mouthpiece, an improved connection device and an improved connection method.

The above object is achieved, on the one hand, by a protective gas mouthpiece of the type described above, wherein the protective gas is introduced into the cleaning space in such a manner that a main flow direction of the protective gas in a radial centre of the cleaning space is orientated in a substantially radial and unidirectional manner.

The above object is further achieved by a connection device having a connection element retention device and having a protective gas mouthpiece according to the invention which surrounds the connection element retention device.

Finally, the above object is achieved by a method for carrying out a connection process using protective gas, in particular by means of a protective gas mouthpiece according to the invention, having the steps of (i) axially placing a protective gas mouthpiece on a workpiece, wherein inside the protective gas mouthpiece a connection element is arranged so as to be able to be axially offset with respect to the protective gas mouthpiece, (ii) raising the connection element from the workpiece so that an intermediate space is released between the connection element and the workpiece, and having the additional step of (iii) supplying protective gas to the protective gas mouthpiece.

Using the protective gas mouthpiece according to the invention and the connection device according to the invention and the associated connection method, it is possible to carry out connection processes with short cycle times. According to the invention, account is taken of the fact that the supply of protective gas to the mouthpiece is carried out in such a manner that ambient gas contained therein (for example, air) is displaced in the most rapid and efficient manner possible. The frequently desired notion in the prior art that the protective gas has to flow in a laminar manner inside the mouthpiece is subordinate to this approach to the solution.

For short cycle times, it is preferable for the displacement of the ambient gas to be carried out in the most rapid and efficient manner possible, in particular in a radial centre of the cleaning space, that is to say, at a location where the arc later burns when the connection process is carried out as an arc stud welding process. That is to say, the ambient gas is displaced efficiently precisely where it could cause the most "damage". The ambient gas is displaced by protective gas whose presence does not influence the arc welding process in a disadvantageous manner.

The supply of protective gas to the cleaning space of the protective gas mouthpiece is preferably carried out in an asymmetrical manner in order in this manner to produce a main flow direction which is orientated in a radial centre of the cleaning space in a substantially radial and unidirectional manner. As a result of this radial orientation of the main flow of the protective gas, which orientation is substantially unidirectional in the radial centre of the cleaning space, the radial centre of the cleaning space can be purged of ambient gas in an efficient and above all rapid manner.

The main flow direction of the protective gas is preferably produced by flows of protective gas being combined with each other from a plurality of channels so that the main flow direction is produced.

The connection process may be a welding process, but may also be a soldering process, an adhesive bonding process or another type of connection process. A connection element is preferably connected in the connection process with the connection face thereof to a surface of the workpiece.

The cleaning space of the base member is preferably constructed in such a manner that protective gas can be axially discharged from the workpiece only in one direction. That is to say, no outlet openings are preferably provided in the protective gas mouthpiece in the region of the cleaning space in a peripheral direction. An axial sealing of the cleaning space is carried out substantially by placing the mouth of the protective gas mouthpiece on the workpiece.

In the method according to the invention, it is particularly significant that, before the actual connection process, and preferably after a first placement of the connection element on the workpiece in order to determine the zero position, a cleaning step is carried out in which the connection element is raised from the workpiece in such a manner that an intermediate space is released between the connection element and the workpiece.

The intermediate space is preferably part of the cleaning space, that is, the space which in the subsequent connection process is substantially taken up by the arc.

The supply of protective gas in this cleaning step is thus preferably carried out before the arc is produced so that the intermediate space as part of the cleaning space can be purged efficiently and without occurrences of turbulence of ambient gas which is efficiently displaced in this manner.

In the cleaning step before the actual connection process, the supply of protective gas to the protective gas mouthpiece is preferably carried out in an asymmetrical manner so that the supplied protective gas flows in the intermediate space in a main flow direction which is orientated in a substantially radial and unidirectional manner in order to displace the ambient gas from the intermediate space.

Depending on the embodiment of the present invention, at least one of the following advantages is afforded: better protective gas coverage, better welding results, cycle time savings since shorter flow times are required. The protective gas consumption can be reduced with the weld quality remaining the same. As a result of new structural possibilities, significant improvements can be achieved in terms of accessibility. The maintenance complexity can be reduced.

The object is consequently completely achieved.

According to a preferred embodiment of the protective gas mouthpiece, the base member has a plurality of protective gas supply channels which are arranged so as to be distributed over the periphery.

Generally, the protective gas supply channels could also be guided at the outer side on the protective gas mouthpiece. However, they are preferably integrated in the base member and distributed over the periphery so that the mouthpiece can be constructed with few disruptive contours. It is thereby possible for the connection process to be able to be carried out at more inaccessible locations of a workpiece.

The orientation of the protective gas supply channels may, for example, be carried out at an angle of from 20º to 75º with respect to a longitudinal axis, in particular in a range from 25º to 60º. The protective gas supply channels are preferably arranged in each case in radial planes, that is to say, preferably not orientated in an inclined manner. That is to say, the orientation of the protective gas supply channels preferably has no tangential component or an orientation in a tangential direction which is smaller than 10º.

Preferably, the protective gas supply channels open directly above the cleaning space and preferably above the position which a connection face of a connection element can assume as the highest position inside the opening.

The cross sections of the protective gas supply channels are preferably of the same size in each case.

According to another preferred embodiment, the distribution of a protective gas supply over the periphery is carried out in a non-uniform manner so that there occurs no protective gas supply in a peripheral portion which extends over more than 90º.

Preferably, in this instance, the distribution of the protective gas supply channels over the periphery is in this manner non-uniform.

The peripheral portion within which no supply of protective gas is produced or no protective gas supply channel is arranged is preferably greater than 120º, in particular greater than 135º, in particular greater than 150º, preferably greater than 170º and is preferably less than 270º, in particular less than 250º, preferably less than 225º, in particular less than 190º. Preferably, the peripheral portion inside which there is produced no protective gas supply is approximately 180º.

It is further preferable for the protective gas supply to take place over the periphery in such a manner that at least two protective gas supply orientations or two protective gas supply channels are diametrically opposite each other and consequently blow protective gas diametrically into the cleaning space and meet in the radial centre of the cleaning space.

In this central region of the cleaning space, another supply flow or a plurality of additional supply flows from one side then meets the centre and in this case also carries the protective gas flows which are flowing diametrically towards each other in a main flow direction which is consequently orientated in a substantially radial and unidirectional manner in a radial centre of the cleaning space.

It is thereby possible for the central portion of the cleaning space to be able to be purged of ambient gas in a rapid and efficient manner since the protective gas can efficiently clean this region.

The displacement is carried out in this instance in a radial direction in a unidirectional manner towards the peripheral portion inside which there occurs no supply of protective gas so that the ambient gas in this region can be discharged axially upwards, that is to say, away from the workpiece, in an efficient manner without being mixed with incoming protective gas.

It is particularly preferable for precisely three protective gas supply channels to be formed in the base member, of which two are diametrically opposed. This number of protective gas supply channels allows a better orientation of the protective gas main flow.

In this instance, it is preferable for the third protective gas supply channel to be orientated perpendicularly relative to a connection line of the other two protective gas supply channels. In other words, the third protective gas supply channel is arranged perpendicularly to the general median plan, in which the first and second protective gas supply channel extend. This arrangement allow a good orientation of the protective gas main flow.

In this embodiment, the peripheral portion inside which no protective gas supply channel is arranged is approximately 180º (or precisely 180º minus the proportion of the diametrically opposed protective gas supply channels, that is to say, for example, less than 178º).

According to another preferred embodiment which together with the preamble of claim 1 constitutes a separate invention, there is associated with the protective gas mouthpiece in an axial region which is opposite the axial opening an annular space to which protective gas can be supplied, wherein the annular space is connected to each protective gas supply channel of a plurality of protective gas supply channels inside the base member.

It is thereby possible for the protective gas to be able to be supplied to a central location on the protective gas mouthpiece. On the mouthpiece there is consequently produced, in the region of the axial opening facing the workpiece, a particularly compact construction. In addition, the accessibility and maintenance is simplified in the region of the mouthpiece.

In particular with an arc stud welding process, there may occur during this process weld spatters which lead to contamination in the region of the mouthpiece. With simplified accessibility, it is thereby consequently possible to improve the overall maintainability of the connection device.

In this aspect of the invention, it is preferable for the annular space to be connected to at least one of the protective gas supply channels by means of a flow resistance arrangement.

A flow resistance arrangement represents an increased flow resistance in the region of the input of the at least one protective gas supply channel. For example, such a flow resistance arrangement may be formed by means of a sintered element or by means of a metal grid or mesh, or an open-pored metal foam or the like.

It is particularly preferable for all the protective gas supply channels to be connected to the annular space by means of a flow resistance arrangement.

It is thereby possible with a central supply to nonetheless unify the flow rate in the protective gas supply channels since, via the flow resistance arrangement, a dynamic pressure is produced and ensures that the protective gas is discharged in a uniform manner in all protective gas supply channels.

According to another preferred embodiment, the cross section of the protective gas mouthpiece is constructed in a substantially elliptical manner. It is also thereby possible to achieve better accessibility to difficult-to-access locations of the workpiece.

The main flow direction of the protective gas in the region of the cleaning space is preferably carried out in this instance along the main axis (the longer axis) of such an elliptical shape.

In the method according to the invention, it is further advantageous if, after the preparatory cleaning process, the actual connection process is carried out optionally using protective gas, wherein the connection element is first placed on the workpiece after the cleaning process and an electric current is switched on and flows through the connection element and the workpiece, wherein the connection element is subsequently raised from the workpiece so that there is produced between the connection element and the workpiece an arc which melts connection faces of the connection element and the workpiece, and wherein the connection element is subsequently lowered onto the workpiece and the electric current is switched off so that the connection element is secured to the workpiece in a materially engaging manner.

It is particularly advantageous in this instance for the step in which the arc is produced to be able to be carried out at a time at which the cleaning space and in particular the intermediate space between the connection element and the workpiece has already been extensively or completely purged of ambient gas which has been displaced by the protective gas flowing in the main flow direction.

The connection process can then be carried out whilst protective gas continues to be supplied. The protective gas supply can be carried out during the connection process in the same manner as in the previous cleaning process. However, the supply of protective gas during the connection process can also be carried out in such a manner that protective gas is then supplied at a lower flow rate than during the cleaning process.

It is further advantageous for the connection element when protective gas is supplied in order to displace ambient gas during the cleaning step to be held from the workpiece at a spacing which is greater than 1 mm.

Preferably, this spacing is greater than 2 mm, in particular greater than 3 mm.

Of course, the features which have been mentioned above and those which will be explained below can be used not only in the combination set out but also in other combinations or alone, without departing from the scope of the present invention.

Embodiments of the invention are illustrated in the drawings and are explained in greater detail in the following description. In the drawings:
- Fig. 1: is a schematic longitudinal section of a connection device with an embodiment of a protective gas mouthpiece according to the invention;
- Fig. 2: is a sectioned view along the line II-I of Figure 1;
- Fig. 3: is a sectioned view along the line III-II of Figure 1;
- Fig. 4: is a sectioned view along the line IV-IV of Figure 1;
- Fig. 5: shows the connection device of Figure 1 during a cleaning step before carrying out a connection process;
- Fig. 6: shows a time graph of the spacing between the workpiece and connection element and electrical connection current over time;
- Fig. 7: is a schematic longitudinal section through another embodiment of a protective gas mouthpiece according to the invention; and
- Fig. 8: is a schematic cross section through another embodiment of a protective gas mouthpiece according to the invention.

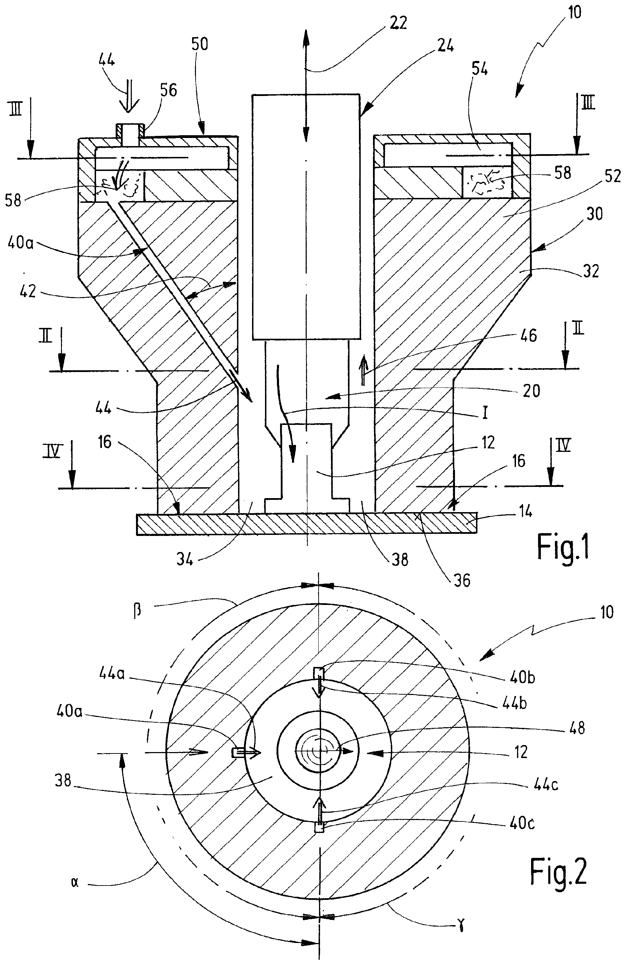

In Figures 1 to 4, a connection device is shown in schematic form and generally designated 10.

The connection device 10 serves to connect a connection element 12 which is constructed in this instance as a stud with a shaft and an enlarged flange to a workpiece 14, more specifically to the workpiece surface 16 thereof.

The connection device 10 is constructed in particular as an arc stud welding device but may also be constructed as a soldering or adhesive bonding device or the like.

The connection device 10 has a retention device 20 which is constructed to retain a connection element 12 which is intended to be connected to the workpiece 14. Via the retention device 20, there is optionally also supplied an electrical connection current I which is used for the stud welding operation.

A conventional stud welding process makes provision for the connection element 12 to first be placed on the surface 16 of the workpiece 14. Subsequently, a reduced electric current I in the form of a pilot current is switched on. Subsequently, the connection element 12 is raised from the workpiece surface 16 so that an arc is drawn. Subsequently, the electric current I is increased to a welding current which may be greater than 1000 ampere. The mutually opposed faces of the connection element 12 and the workpiece 14 thereby melt. Subsequently, the connection element 12 is lowered onto the workpiece 14, preferably as far as a location below the workpiece surface 16 so that the electric current is short-circuited and switched off. Subsequently, the overall melt hardens so that a materially engaging connection is achieved between the connection element 12 and the workpiece 14.

In order to carry out this connection process which is generally known, the retention device 20 can be axially moved along a longitudinal axis as shown in Figure 1 at 22 in order to axially raise and lower the connection element 12 with respect to the workpiece 14.

To this end, the retention device 20 is connected to a housing portion 24 which may be part of a connection head which is automated or guided by means of a robot but which may also be part of a mobile or portable connection device. The housing portion 24 may, for example, contain an axial drive and may further contain a guiding element receiving member, by means of which guiding elements 12 are automatically supplied. A loading pin which is supported so as to be able to be axially moved with respect to the housing portion 24 and with respect to the retention device 20 can load a connection element in the retention device 20.

All these elements are known in the prior art. In addition, it is also known that connection elements are supplied to the retention device 20 from the front.

The connection device 10 further contains a protective gas mouthpiece 30 which is supported on the housing portion 24 in such a manner that the retention device 20 can carry out relative movements in relation to the mouthpiece 30.

The mouthpiece 30 has a base member 32 which has an axial opening 34 inside which the retention device 20 with a connection element 12 retained therein can be received. The axial opening 34 may also be constructed substantially as a through-opening 34 so that the housing portion 24 extends into the axial opening 34 from the opposing axial end.

At the portion of the base member 32 facing forwards in the connection direction, the base member has a mouth 36 which can be placed on the workpiece surface 16 in such a manner that the axial opening 34 is covered or can be delimited axially by the workpiece 14 and together with the base member 32 or the axial opening 34 thereof defines a cleaning space 38.

Protective gas can be supplied to the cleaning space 38. The protective gas is intended to displace ambient gas, such as air, from the cleaning space 38 in order to improve the above-described stud welding process.

In the above-described connection process, the connection device 10 is first moved in such a manner that the mouthpiece 30 is placed with the mouth 36 on the workpiece 14. Subsequently, in a first step, the retention device 20 is moved relative to the mouthpiece 30 in order to place the connection element 12 on the workpiece surface 16 and consequently to carry out a type of zero point determination. The mouthpiece 30 consequently also acts as a type of support base.

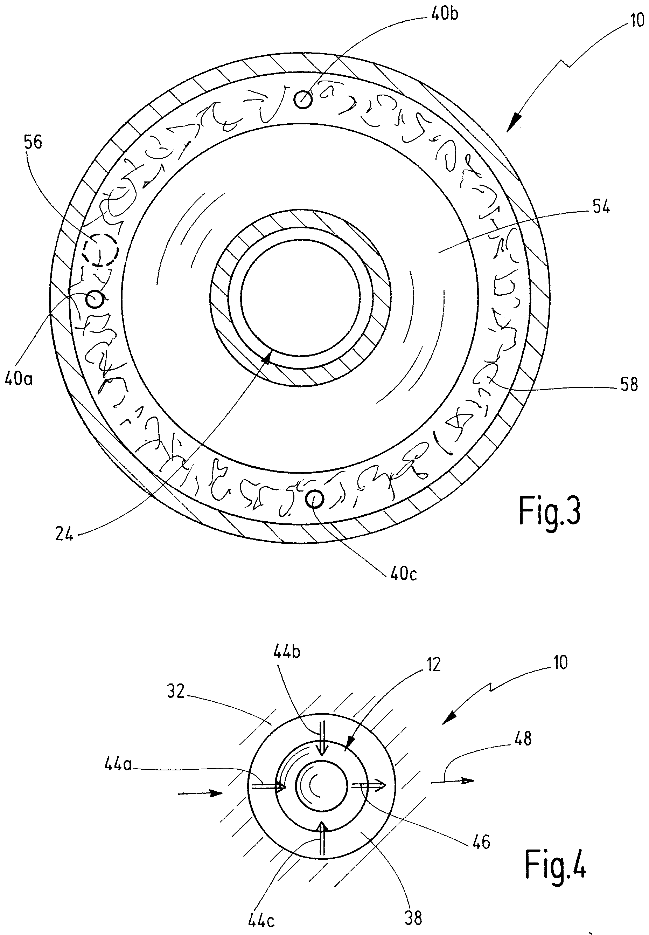

Generally, protective gas (also known as a shield gas or inerting gas) can be supplied to the cleaning space 38 in different manners. In this instance, a plurality of supply channels 40a, 40b, 40c are constructed in the base member 32, as can be seen in particular in Figure 2 and Figure 3. The supply channels 40a, 40b, 40c extend from the axial end of the base member 32 facing away from the workpiece 14 at a supply angle 42 in an inclined manner in the direction towards the cleaning space 38. The supply angle which is shown in Figure 1 at 42 may be in a range from 5º to 90º. The supply channels 40 may be constructed as linear holes, as illustrated in Figure 1, which is preferable for reasons of cost. However, they may also be formed from a plurality of channel portions which are formed at an angle relative to each other.

Figures 1, 2 and 4 illustrate that protective gas supply flows 44a, 44b, 44c are introduced into the cleaning space 38 via the supply channels 40a, 40b, 40c in such a manner that a main flow direction of the protective gas in a radial centre of the cleaning space 38 is orientated in a substantially radial and unidirectional manner.

The excess protective gas from the cleaning space 38, in the same manner as the displaced ambient gas, is discharged axially upwards away from the workpiece 14, as schematically indicated in Figure 1 at 46. The discharge of the protective gas and the ambient gas may be constructed in a similar manner to that described in document DE 20 2004 001 667 U1, the content of which is therefore further incorporated herein by reference in this instance.

Figure 2 and Figure 4 show the radially orientated main flow direction 48. This is produced by the protective gas supply channels being distributed over the periphery in a non-uniform manner so that no protective gas supply channel 40 is arranged in a peripheral portion γ which extends over more than 90º.

The angle γ is in this instance preferably less than or equal to approximately 180º. Figure 2 illustrates that the angle γ is 180º or slightly less than 180º since the supply channels 40b, 40c are arranged diametrically opposite each other on diametrically opposed sides of the main flow direction 48. The protective gas supply channels 40 are all arranged inside a peripheral portion β, for which: 360º - γ = β.

A third supply channel 40a is arranged in the peripheral direction between the two supply channels 40b, 40c so as to be spaced apart from both over an angle α which according to Figure 2 is preferably 90º.

The main flow direction 48 for the protective gas inside the cleaning space or in the centre of the cleaning space is produced by the protective gas with the flows 44b, 44c which are directed directly towards each other, then being pressed away by means of the third protective gas supply flow 44a in a radial direction in a unidirectional manner and then preferably being directed away primarily inside the peripheral portion γ in an upward direction, also partially at a diametrically opposed side, which is, however, not illustrated in Figure 1.

The protective gas mouthpiece 30 further has a protective gas distributor device 50 which is arranged at an axially upper end 52 of the base member 32. The protective gas distributor device 50 defines an annular space 54 in which protective gas 44 can be supplied by means of an individual supply connection 56.

The protective gas supply channels 40a, 40b, 40c each open either directly in the annular space 54.

However, there is preferably arranged between the ends of the supply channels 40a, 40b, 40c and the annular space 54 a flow resistance arrangement 58 which may be constructed as a ring which is placed in the annular space 54. The flow resistance arrangement 58 may, for example, be formed from a sintered metal arrangement with fine holes or fine pores but may also be formed by means of a fine-pored metal foam, a wire mesh or the like.

As a result of the flow resistance arrangement 58, there is produced inside the annular space 54 a dynamic pressure which ensures that the protective gas supply flows 44a, 44b, 44c are all substantially of the same size. This construction is generally preferred.

The supply of protective gas to the cleaning space 38 can be carried out according to the invention when the connection process is started, that is to say, after the mouthpiece has been placed on the workpiece and the connection element 12 has also been placed on the workpiece surface 16. In this instance, the supply of protective gas takes place substantially when the connection process is carried out, that is to say, when the arc is drawn.

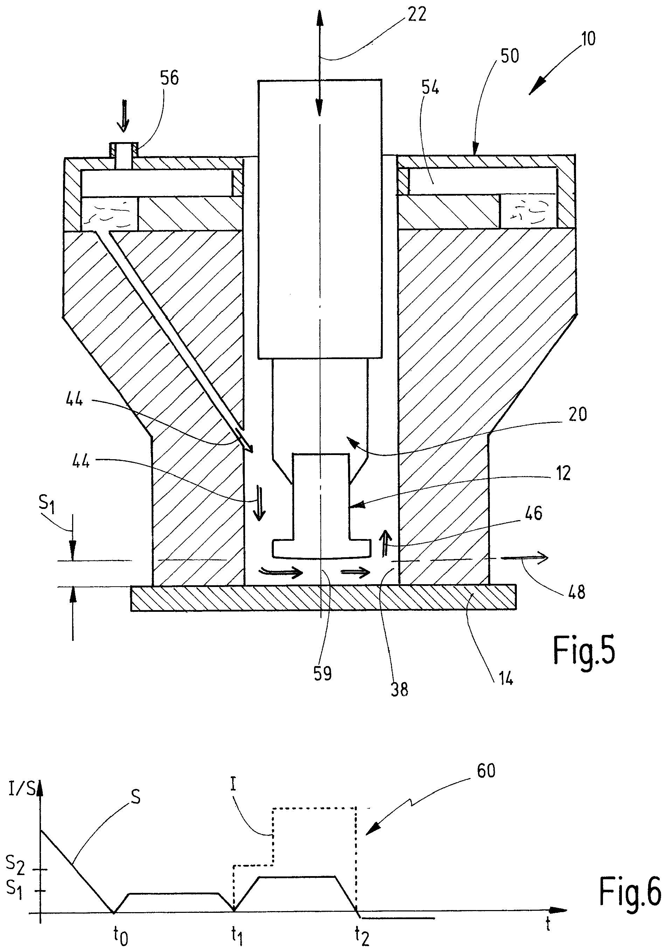

Figures 5 and 6 show an alternative method indicating how the connection process on the whole can be carried out.

Thus, Figure 5 shows that, in a cleaning step which is upstream of the actual connection process, the connection element 12 is raised from the workpiece 14 by a distance S₁. It is thereby possible for the protective gas which flows when introduced in a main flow direction, which is orientated in the radial centre of the cleaning space 38 in a substantially radial and unidirectional manner, to be able to flow in particular below the connection element 12, that is to say, in an intermediate space 59 between the mutually opposed connection faces of the connection element 12 and the workpiece 14. It is thereby possible, precisely in this region in which the arc will later be produced, for a significant displacement of ambient gas to be carried out, without occurrences of turbulence or the like.

In Figure 6, this is illustrated in a time sequence.

At S, the spacing between the connection element 12 and the workpiece 14 is illustrated. At I, the electric current is illustrated. The graph 60 shown in Figure 6 shows these variables over time t.

Based on an initial state, in which the connection device 10 is moved in the direction towards the workpiece 14, the spacing S is reduced until, at a time to, the connection element 12 has been placed on the workpiece 14. In this state, the mouthpiece 30 is generally also placed on the workpiece 14.

Subsequently, at time to, the connection element 12 is raised from the workpiece by the spacing S₁ and protective gas is supplied so that a displacement of ambient air can be carried out, as schematically shown in Figure 5, in a main flow direction 48.

At the time t₁, with the end of this cleaning step, the connection element 12 is lowered onto the workpiece 14 again. Subsequently, the electric current I is switched on, initially in the form of a pilot current. Subsequently, the connection element 12 is raised again from the workpiece 14 by a distance S₂ which may be equal to the value of S₁ but which may also be larger or smaller. Shortly after t₁, the electric current I is increased to a weld current.

As soon as the connection faces have begun to melt, the connection element 12 is lowered onto the workpiece 14, preferably to below the zero point, so that, at the time t₂, the connection element 12 and the workpiece 14 are in contact and an electric short-circuit is produced, as a result of which the electric weld current I is switched off.

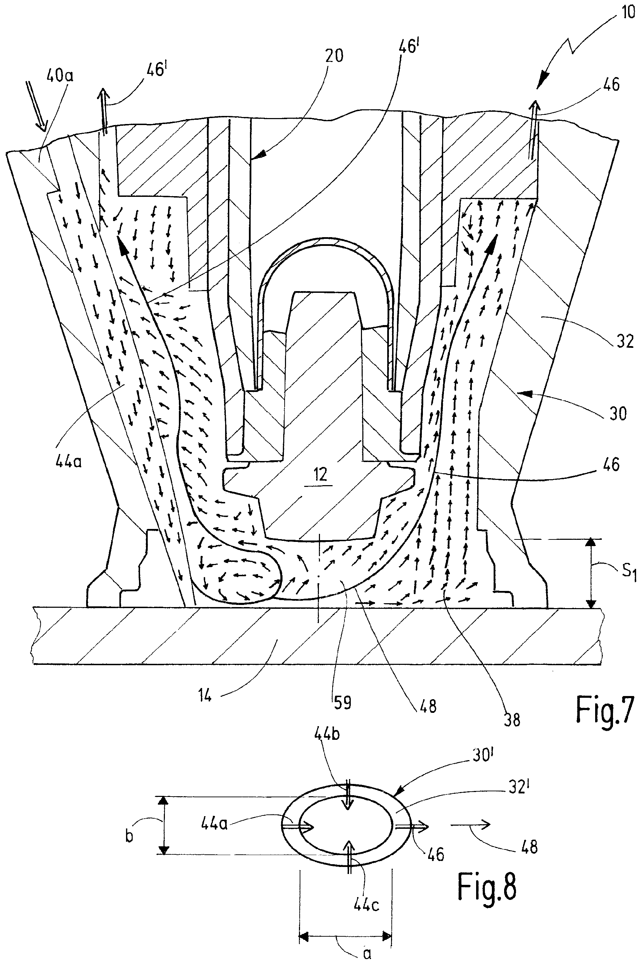

Figure 7 shows an embodiment of a connection device 10 with a mouthpiece 30 which in terms of structure and operating method generally corresponds to the connection device 10 and the mouthpiece 30 of Figures 1 to 5.

Figure 7 shows the state in the cleaning step in which, between the time to and t₁, the protective gas is supplied whilst, between the connection element 12 and the workpiece 14, a spacing S₁ is produced. This leads, as shown by the simulated flow with many arrows, to a main flow direction 48 which is orientated in a substantially radial and unidirectional manner. Protective gas is discharged from the cleaning space 38 in an upward direction, in particular at 46 in the region of the peripheral portion γ. A smaller portion of the protective gas (and the air) is also discharged in the other peripheral portions, as shown in Figure 7 at 46'.

Figure 8 shows another embodiment of a protective gas mouthpiece 30' which has a base member 32' which is constructed to be elliptical in cross section, with a main axis a and an auxiliary axis b. As a result of an elliptical mouthpiece 30, the connection device can also be used with workpieces which are difficult to access.

The protective gas supply is in turn carried out via three channels 44a, 44b, 44c, wherein the main flow direction 48 is preferably produced parallel with the main axis a.

## Claims

1. Protective gas mouthpiece (30) for a connection device (10), having a base member (32) which has an axial opening (34) and a mouth (36) which is arranged around the opening (34) and which can be placed on a workpiece (14) on which a connection process is intended to be carried out, wherein the opening (34) adjacent to the mouth (36) defines a cleaning space (38) in which protective gas (44) can be introduced and which, when a connection process is carried out, can be axially delimited by a workpiece (14) which covers the opening (34),
**characterized in that**
the protective gas (44) is introduced into the cleaning space (38) in such a manner that a main flow direction (48) of the protective gas (44) in a radial centre of the cleaning space (38) is orientated in a substantially radial and unidirectional manner.

2. Protective gas mouthpiece according to Claim 1, **characterized in that** the base member (32) has a plurality of protective gas supply channels (40) which are arranged so as to be distributed over the periphery.

3. Protective gas mouthpiece according to Claim 1 or Claim 2, **characterized in that** the distribution of the protective gas supply (40) over the periphery is non-uniform so that no protective gas supply (40) is arranged in a peripheral portion (γ) which extends over more than 90º.

4. Protective gas mouthpiece according to Claim 3, **characterized in that** precisely three protective gas supply channels (40a, 40b, 40c) are formed in the base member (32), of which two (40b, 40c) are diametrically opposed.

5. Protective gas mouthpiece according to any one of Claims 2 to 4 or according to the preamble of Claim 1, **characterized in that** there is associated with the protective gas mouthpiece (30) in an axial region (52) which is opposite the axial opening (34) an annular space (54) to which protective gas (44) can be supplied, wherein the annular space (54) is connected to each of a plurality of protective gas supply channels (44) in the base member (32).

6. Protective gas mouthpiece according to Claim 5, **characterized in that** the annular space (54) is connected to at least one of the protective gas supply channels (44) by means of a flow resistance arrangement (58).

7. Connection device (10) having a connection element retention device (20) and having a protective gas mouthpiece (30) according to any one of Claims 1 to 6 which surrounds the connection element retention device (20).

8. Method for carrying out a welding process using protective gas, in particular by means of a protective gas mouthpiece (30) according to any one of Claims 1 to 6, having the steps of:
- axially placing a protective gas mouthpiece (30) on a workpiece (14), wherein inside the protective gas mouthpiece (30) a connection element (12) is arranged so as to be able to be axially offset with respect to the protective gas mouthpiece (30),
- raising the connection element (12) from the workpiece (14) so that an intermediate space (59) is released between the connection element (12) and the workpiece (14), and
- supplying protective gas (44) to the intermediate space.

9. Method according to Claim 8, having the step of supplying protective gas (44) to the protective gas mouthpiece (30) in an asymmetrical manner so that the supplied protective gas (44) flows in the intermediate space (59) in a main flow direction (48) which is orientated in a substantially radial and unidirectional manner in order to displace ambient gas from the intermediate space (59).

10. Method according to Claim 8 or Claim 9, having the additional steps of:
- placing the connection element (12) on the workpiece (14) after ambient gas has been displaced out of the intermediate space (59) and switching on an electric current (I) which flows through the connection element (12) and the workpiece (14),
- raising the connection element (12) from the workpiece (14) so that there is produced between the connection element (12) and the workpiece (14) an arc which melts connection faces of the connection element (12) and the workpiece (14) and
- lowering the connection element (12) onto the workpiece (14) and switching off the electric current (I) so that the connection element (12) is secured to the workpiece (14).

11. Method according to any one of Claims 8 to 10, wherein the connection element (12) when the protective gas (44) is supplied in order to displace ambient gas is held from the workpiece (14) at a spacing (S₁) which is greater than 1 mm.
